(19) Europäisches Patentamt
European Patent Office
Office européen des brevets

(11) **EP 3 416 015 A1**

(12) **EUROPEAN PATENT APPLICATION**

(43) Date of publication:
**19.12.2018 Bulletin 2018/51**

(51) Int Cl.:
**G05D 1/00** (2006.01)

(21) Application number: **18177057.9**

(22) Date of filing: **11.06.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.06.2017 US 201715619574**

(71) Applicant: **Dronomy Ltd.**
**6744367 Tel Aviv (IL)**

(72) Inventors:
• **APHEK, Ori**
  **Ramat Gan (IL)**
• **RAZ, Guy**
  **3055104 Binyamina (IL)**

(74) Representative: **Beck Greener**
**Fulwood House**
**12 Fulwood Place**
**London WC1V 6HR (GB)**

(54) **AN APPARATUS AND METHOD FOR OPERATING AN UNMANNED AERIAL VEHICLE**

(57) Described embodiments include a method for operating an unmanned aerial vehicle (UAV) (20). The method includes receiving a signal (36) that indicates a configuration of a crane (30), computing, in response to the signal, a flight path (50) that passes under a boom (40) of the crane while circumventing the crane, and causing the UAV to follow the computed flight path, by transmitting flight instructions to the UAV. Other embodiments are also described.

FIG. 1

EP 3 416 015 A1

**Description**

The present invention relates to the field of unmanned aerial vehicles (UAVs), also known as drones. The present invention also relates to the monitoring of a construction site using an unmanned aerial vehicle.

International Patent Application Publication WO 2016/165883 describes a system having a plurality of objects, of which at least one object is a flying object. The objects each have a wireless module for exchanging information signals with at least a part of the other objects. The information signals in particular include information relating to position, speed of movement, and direction of movement of the objects. The objects form a local network with one another, in particular an ad hoc network, in order to be able to pass on the information and process the information.

US Patent 8,144,000 describes a method for avoiding a collision on a job site, in which information is received regarding a plurality of selected entities on the job site. The information is received at a location independent from the entities. The information is evaluated to determine whether a trigger has occurred. The trigger is associated with a potential collision situation involving an entity of the entities. A collision alert message is issued for the entity if the trigger has occurred.

European Patent Application Publication EP 2520532 describes a system for preventing a collision of a plurality of cranes, the system including global positioning system (GPS) receivers respectively installed in the plurality of cranes, configured to obtain and transmit GPS coordinates by using a wireless communication network, and a local controller respectively installed in the plurality of cranes, configured to predict a collision with a specific crane located within a range communicable through the wireless communication network from among the plurality of cranes, based on GPS coordinates received from the specific crane.

International Patent Application Publication WO 2009/084820 describes a system for preventing collisions of cranes and monitoring crane work. The system includes a plurality of GPS receivers installed in a plurality of cranes to acquire and transmit GPS coordinates for the respective cranes, and a main management unit for predicting collisions between the respective cranes using the GPS coordinates of the cranes transmitted from the GPS receivers, rotation angle and tilt information of a jib crane boom transmitted from a first rotation sensor and a tilt sensor installed in the jib crane boom, and rotation angle information of a tower crane boom transmitted from a second rotation sensor installed in the tower crane boom.

US Patent Application Publication 2016/0225267 describes a beacon system, which includes a case that defines a compartment and a lid, a ground plane mount that is pivotally coupled to the case, a monopole antenna carried by the ground plane mount, and an ADS-B transmitter. The ADS-B transmitter is disposed within the compartment and electrically coupled to the monopole antenna.

There is provided, in accordance with a first aspect of the present invention, an apparatus for operating an unmanned aerial vehicle (UAV), the apparatus comprising a receiver, a transmitter, and a processor; wherein the processor is configured to receive, via the receiver, coordinates of a position sensor coupled to a portion of a crane, a configuration of the crane changing over time due at least to movement of the portion of the crane relative to a tower of the crane; to compute, in response to the received coordinates, a flight path that passes under a boom of the crane while circumventing the crane; and to cause the UAV to follow the computed flight path, by transmitting flight instructions, via the transmitter, to the UAV.

In some embodiments, the processor is configured to compute the flight path by defining, in response to the received coordinates, a plurality of no-fly volumes that encompass different respective portions the crane, and computing the flight path such that the flight path does not pass through any of the no-fly volumes.

In some embodiments, the processor is further configured to track the coordinates of the position sensor over a period of time, prior to computing the flight path, and to ascertain, in response to the tracking, one or more parameters selected from the group of parameters consisting of: a location of the tower, a height of the boom, and a length of the boom, and wherein the processor is configured to define one or more of the no-fly volumes responsively to the ascertained parameters.

In some embodiments, the portion of the crane to which the position sensor is coupled is selected from the group of portions of the crane consisting of: the boom of the crane, a trolley of the crane, and a hook that hangs from the boom of the crane.

In some embodiments, the processor is configured to compute the flight path by in response to the received coordinates, ascertaining a current configuration of the crane, and computing the flight path, in response to the ascertained current configuration.

In some embodiments, the processor is configured to ascertain the current configuration of the crane by ascertaining an angle of rotation of the boom of the crane.

In some embodiments, the processor is configured to ascertain the current configuration of the crane by ascertaining a distance from the tower to the portion of the crane to which the position sensor is coupled.

In some embodiments, the processor is configured to compute the flight path by computing an expected configuration of the crane at a future time, based on the ascertained current configuration, and computing the flight path, in response to the expected configuration.

In some embodiments, the processor is further configured to track the coordinates of the position sensor over a period of time, prior to computing the flight path, and to ascertain, in response to the tracking, one or more parameters selected from the group of parameters consisting of: a location of the tower, and a height of the boom of the crane, and wherein the processor is configured to compute the flight path responsively to the ascertained parameters.

There is further provided, in accordance with a second aspect of the present invention, an apparatus for operating an unmanned aerial vehicle (UAV). The apparatus includes a transmitter and a processor. The processor is configured to ascertain a configuration of a crane, to define a plurality of no-fly volumes that encompass different respective portions the crane, in response to the ascertained configuration of the crane, to compute a flight path that passes under a boom of the crane without passing through any of the no-fly volumes, and to cause the UAV to follow the computed flight path, by transmitting flight instructions, via the transmitter, to the UAV.

In some embodiments, the no-fly volumes include a first no-fly volume, which encompasses a tower of the crane, a second no-fly volume, which encompasses the boom of the crane, and a third no-fly volume, which encompasses a hook that hangs from the boom the crane.

There is further provided, in accordance with a third aspect of the present invention, an apparatus for operating an unmanned aerial vehicle (UAV). The apparatus includes a receiver, a transmitter, and a processor. The processor is configured to receive, via the receiver, a signal that indicates a configuration of a crane, to compute, in response to the signal, a flight path that passes under a boom of the crane while circumventing the crane, and to cause the UAV to follow the computed flight path, by transmitting flight instructions, via the transmitter, to the UAV.

In some embodiments, the signal is generated by an internal tracking system of the crane.

In some embodiments, the signal is generated by a position sensor coupled to a portion of the crane, the configuration of the crane changing over time due at least to movement of the portion of the crane relative to a tower of the crane.

There is further provided, in accordance with a fourth aspect of the present invention, a method for operating an unmanned aerial vehicle (UAV), the method includes receiving coordinates of a position sensor coupled to a portion of a crane, a configuration of the crane changing over time due at least to movement of the portion of the crane relative to a tower of the crane. The method further includes, in response to the received coordinates, computing a flight path that passes under a boom of the crane while circumventing the crane, and causing the UAV to follow the computed flight path.

In some embodiments, computing the flight path includes in response to the received coordinates, ascertaining a current configuration of the crane, and computing the flight path, in response to the ascertained current configuration.

In some embodiments, ascertaining the current configuration of the crane includes ascertaining an angle of rotation of the boom of the crane.

In some embodiments, ascertaining the current configuration of the crane includes ascertaining a distance from the tower to the portion of the crane to which the position sensor is coupled.

In some embodiments, computing the flight path includes computing an expected configuration of the crane at a future time, based on the ascertained current configuration; and computing the flight path, in response to the expected configuration.

There is further provided, in accordance with a fifth aspect of the present invention, a method for operating an unmanned aerial vehicle (UAV), the method comprising ascertaining a configuration of a crane, and, in response to the ascertained configuration of the crane, defining a plurality of no-fly volumes that encompass different respective portions the crane. The method further includes computing a flight path that passes under a boom of the crane without passing through any of the no-fly volumes, and causing the UAV to follow the computed flight path.

In some embodiments, the no-fly volumes include a first no-fly volume, which encompasses a tower of the crane, a second no-fly volume, which encompasses the boom of the crane, and a third no-fly volume, which encompasses a hook that hangs from the boom the crane.

There is further provided, in accordance with a sixth aspect of the present invention, a method for operating an unmanned aerial vehicle (UAV), the method comprising receiving a signal that indicates a configuration of a crane; computing, in response to the signal, a flight path that passes under a boom of the crane while circumventing the crane; and causing the UAV to follow the computed flight path.

In some embodiments, the signal is generated by an internal tracking system of the crane.

In some embodiments, the signal is generated by a position sensor coupled to a portion of the crane such that the signal indicates the configuration of the crane by indicating coordinates of the position sensor, the configuration of the crane changing over time due at least to movement of the portion of the crane relative to a tower of the crane.

In some embodiments, causing the UAV to follow the computed flight path comprises causing the UAV to follow the computed flight path by transmitting flight instructions to the UAV.

In some embodiments, computing the flight path includes in response to the coordinates of the position sensor, defining a plurality of no-fly volumes that encompass different respective portions the crane; and computing the flight path such that the flight path does not pass through any of the no-fly volumes.

In some embodiments, the method further includes, tracking the coordinates of the position sensor over a period of time, prior to computing the flight path;

and ascertaining, in response to the tracking, one or more parameters selected from the group of parameters consisting of: a location of the tower, a height of the boom, and a length of the boom, wherein defining the no-fly volumes includes defining one or more of the no-fly volumes responsively to the ascertained parameters.

In some embodiments, the portion of the crane to which the position sensor is coupled is selected from the group of portions of the crane consisting of: a boom of the crane, a trolley of the crane, and a hook that hangs from the boom of the crane.

The present invention will be more fully understood from the following detailed description of embodiments thereof, taken together with the drawings, in which:

Fig. 1 is a schematic illustration of a UAV configured to monitor a construction site, in accordance with some embodiments of the present invention;

Fig. 2 is a schematic illustration of a flight path computation performed by a processor of a UAV, in accordance with some embodiments of the present invention;

Fig. 3 is a schematic illustration of a plurality of no-fly volumes defined by a processor of a UAV, in accordance with some embodiments of the present invention; and

Fig. 4 is a schematic illustration of a technique for ascertaining one or more crane parameters, in accordance with some embodiments of the present invention.

In embodiments of the present invention, a UAV is used to monitor construction at a construction site. The UAV may be employed by the construction company engaged at the construction site, by a client of the construction company for whom the construction is performed, or by any other interested party.

A challenge, when performing such monitoring, is that moving obstacles may be present at the construction site. Cranes, which may rise to a height of many stories, pose a particular challenge.

One hypothetical solution, to prevent a collision of the UAV with a given crane, is to define a "no-fly volume" encompassing the entire volume in which any portion of the crane may be located at any given instant in time, and to inhibit the UAV from flying through this no-fly volume. This solution, however, significantly limits the range of movement of the UAV, such that the UAV may not be able to monitor the construction site with the required precision.

Embodiments of the present invention therefore provide an alternative, superior solution for avoiding collisions with a crane. Per this solution, the UAV tracks the respective positions of various moving parts of the crane, such that, at any given time, the UAV may compute the current configuration of the crane, and predict future configurations of the crane. Knowing the configuration of the crane allows the UAV to safely fly near the crane, even while the crane is in motion, such that images of the construction site may be acquired from a close distance. For example, the UAV may fly under the boom of the crane without any risk of colliding with the boom, or with the cable and hook that hang from the boom.

Typically, the crane-circumventing techniques described herein are facilitated by the placement of at least one position sensor, such as a Global Positioning System (GPS) sensor, on a moving part of the crane, such as the hook of the crane. This sensor continually transmits, to the UAV, the coordinates of the sensor. Based on the received coordinates, the UAV computes the current configuration of the crane. The UAV may further compute an expected future configuration of the crane, based on observed changes in the received coordinates over time. The UAV may then continue flying near the crane, while making minor adjustments to its flight path, as necessary, to avoid any collisions with the crane.

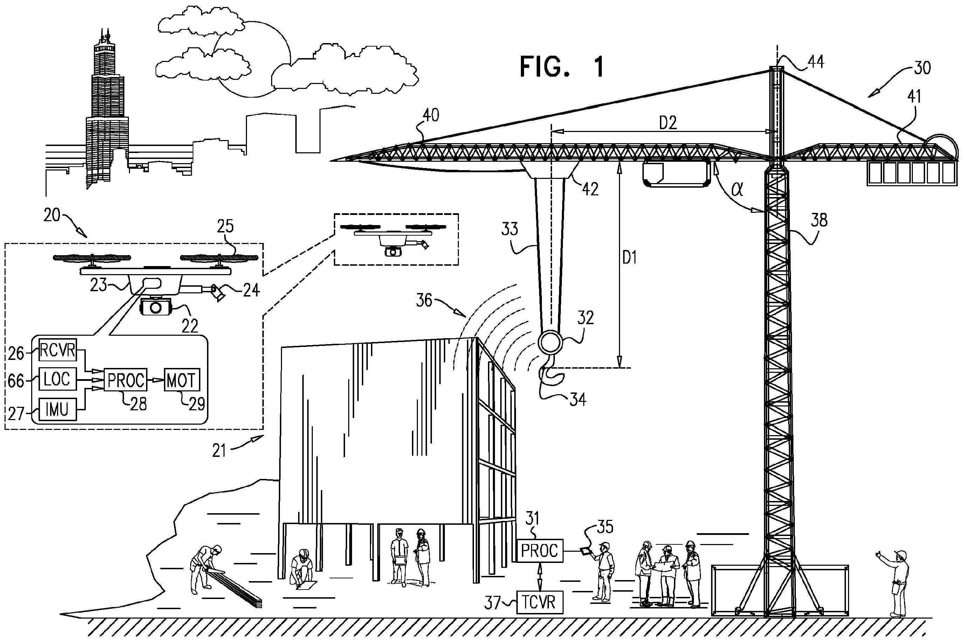

Reference is initially made to Fig. 1, which is a schematic illustration of a UAV 20 configured to monitor a construction site 21, in accordance with some embodiments of the present invention.

UAV 20 comprises a UAV body 23, which houses various components of the UAV. Typically, these components include a location sensor (LOC) 66, comprising, for example, a Global Positioning System (GPS) sensor, an inertial measurement unit (IMU) 27, a wireless receiver (RCVR) 26 (comprising, for example, a cellular, WiFi, or radiofrequency (RF) receiver), a processor 28, and one or more electric motors (MOT) 29. UAV 20 further comprises one or more propellers 25, which are coupled to UAV body 23. Motors 29, which are electrically coupled to propellers 25, are configured to turn propellers 25, in response to control signals received from processor 28. (Typically, each of propellers 25 is turned by a different respective motor 29.)

Typically, UAV 20 further comprises at least one obstacle-avoidance imaging device 24, which is coupled to UAV body 23. Imaging device 24, which may comprise, for example, a charge coupled device (CCD) or complementary metal oxide semiconductor (CMOS) image sensor, a Light Detection and Ranging (LIDAR) sensor, a structured light sensor, and/or a sonar camera, is configured to acquire images of upcoming portions of the flight path of the UAV. Images acquired by obstacle-avoidance imaging device 24 are passed to processor 28, which processes the images such as to identify any upcoming obstacles.

As UAV 20 flies, processor 28 continually receives input from receiver 26, location sensor 66, IMU 27, imaging device 24, and/or any other sensors belonging to UAV 20. For example, processor 28 may continually receive, from location sensor 66, a signal indicating the current location of the UAV, and, from IMU 27, various parameters related to the movement of the UAV, such as the current acceleration of the UAV. (The input from receiver 26 is described below.) Based on these inputs, processor 28 may compute a flight path for the UAV, and/or cause the UAV to follow a computed flight path by driving the motors to turn the propellers in accordance with the desired trajectory. For example, upon identifying an upcoming obstacle in an image received from imaging device 24, processor 28 may compute an alternate flight path, and then cause UAV 20 to fly along the alternate flight path, to avoid the obstacle.

Typically, UAV 20 further comprises a payload imaging device 22, which is configured to acquire images of construction site 21. Payload imaging device 22 may comprise, for example, a CCD or CMOS digital camera, a LIDAR sensor, a structured light sensor, and/or a sonar camera.

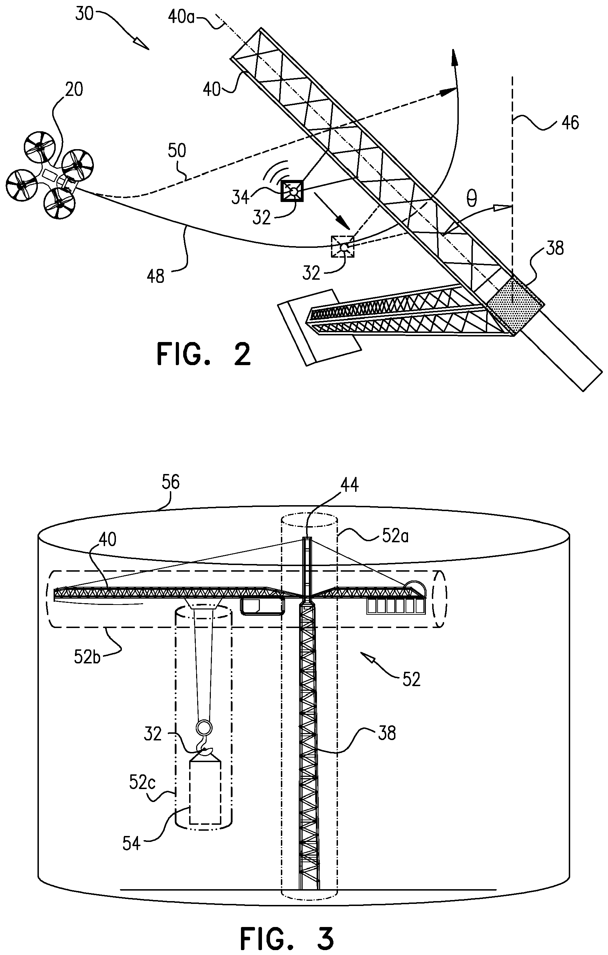

Fig. 1 depicts a crane 30 operating at construction site 21. Crane 30 includes a vertical tower 38, which rises from the ground, a horizontal boom 40, which extends from tower 38, a counter-boom 41, which extends from tower 38 opposite boom 40, a trolley 42, which is slidably coupled to boom 40, and a hook 32, which hangs from the boom via trolley 42 and cables 33. (In the context of the present application, including the claims, the term "hook" may include any portion of the crane that hangs from the boom via cables 33, including, possibly, portions of the crane that are not strictly hook-shaped.) As the crane operates, the configuration of the crane continually changes, due to movement of some portions of the crane relative to tower 38. For example, hook 32 may be raised or lowered, such that the vertical distance between the hook and boom 40 (and hence, between the hook and any fixed point on the tower) changes. As another example, trolley 42 may be moved horizontally along boom 40, such that the horizontal distance between the trolley and the tower changes. As yet another example, boom 40 may rotate around the tower, as further described below with reference to Fig. 2.

As described in detail below, processor 28 (or another processor cooperatively networked with processor 28, as described below) continually ascertains the configuration of crane 30 as the configuration changes over time, and, in response to the ascertained configuration, computes a flight path for the UAV that passes near the crane, yet circumvents the crane (i.e., does not pass through any portion of the crane). Processor 28 then causes the UAV to follow the computed flight path, by controlling motors 29 as described above. While following the computed flight path, processor 28 may use payload imaging device 22 to acquire high-resolution images of construction site 21. Alternatively, the UAV may follow the flight path without acquiring any images of the construction site.

In some embodiments, processor 28 ascertains the configuration of the crane by processing images of the crane acquired by obstacle-avoidance imaging device 24. In particular, the processor may automatically identify various portions of the crane in these images, and then ascertain the configuration of the crane from these identified portions. Typically, however, it is difficult to ascertain the configuration of the crane in this manner, due to the large amount of computing resources that are required, and/or the relatively small size of certain portions of the crane, such as hook 32.

Hence, alternatively or additionally to processing images from obstacle-avoidance imaging device 24, the processor may ascertain the configuration of the crane using information from a position sensor 34 that is coupled to a portion of the crane that is liable to move relative to tower 38, such that the configuration of the crane changes over time due at least to movement, relative to the tower of the crane, of the portion of the crane to which position sensor 34 is coupled. For example, position sensor 34, which comprises, for example, a Global Positioning System (GPS) sensor, may be coupled to hook 32 or trolley 42. Position sensor 34 repeatedly generates a signal 36 that indicates the coordinates of the position sensor (thus indicating, implicitly, the configuration of the crane), and wirelessly transmits this signal, using, for example, a cellular,

WiFi, or RF transmitter. Processor 28 repeatedly receives signal 36 via receiver 26, and then processes signal 36 to ascertain the coordinates of the sensor. The processor may then use the received coordinates to ascertain the current configuration of the crane, as described in detail below.

Alternatively, processor 28 may be cooperatively networked with a ground-based device 35, such as a tablet, smartphone, or laptop computer, comprising a processor (PROC) 31 and a wireless transceiver (TCVR) 37, which comprises a transmitter and a receiver. Transceiver 37 (in particular, the receiver portion thereof) receives signal 36, and passes the signal to processor 31. Processor 31 then processes the received signal, such as to ascertain the current configuration of the crane and, if necessary, compute a flight path for the UAV. Subsequently, if the computed flight path is different from the current flight path that the UAV is following, processor 31 may transmit appropriate flight instructions, via transceiver 37 (in particular, the transmitter portion thereof), to processor 28. Processor 28, upon receiving these instructions via receiver 26, may then cause the UAV to follow the flight path indicated in the instructions from processor 31.

In some embodiments, device 35 is connected (e.g., via a Universal Serial Bus connector) to a UAV remote control, comprising a transmitter configured to transmit to the UAV using any suitable communication protocol. In such embodiments, processor 31 may transmit flight instructions to the UAV via the transmitter of the remote control, rather than via transceiver 37.

For simplicity, when describing various computational tasks below, the present application generally refers to processor 28, or simply to "the processor," as the entity that performs the task, since, as noted above, processor 28 is not necessarily networked with a ground-based device. It is noted, however, that the various computational tasks described herein may be cooperatively performed by processor 28 and processor 31 in any suitable fashion, i.e., processor 31 and processor 28 may divide the required computational tasks amongst themselves in any suitable way. (Typically, the various higher-level computations described below, such as the computation of a current or expected future configuration of the crane, the computation of one or more no-fly volumes, the computation of a flight path, and/or tracking the coordinates of the position sensor over time, are performed by processor 31, while lower-level computations, such as the computation of a required propeller speed, are performed by processor 28.)

In some embodiments, UAV 20 further comprises a transmitter, which processor 28 uses to transmit information (such as acknowledgements of received flight instructions) to processor 31. In general, processor 28 and processor 31 may communicate with one another using any suitable communication protocol, such as any suitable cellular, WiFi, or RF protocol. Similarly, position sensor 34 may be configured to transmit to processor 28, and/or to processor 31, using any suitable communication protocol.

In some embodiments, UAV 20 is a standard, off-the-shelf UAV (which typically comes with an accompanying remote control, which may be used as described above), such as the DJI Phantom 4 Pro or the DJI Matrice 210 RTK. Alternatively, UAV 20 may be specially configured, in that processor 28 may be configured to perform any of the various tasks, related to embodiments of the present invention, that are described herein.

In general, each of processor 28 and processor 31 may be embodied as a single processor, or as a cooperatively networked or clustered set of processors. In some embodiments, processor 28 and/or processor 31 is implemented solely in hardware, e.g., using one or more Application-Specific Integrated Circuits (ASICs) or Field-Programmable Gate Arrays (FPGAs). In other embodiments, each of processor 28 and processor 31 is at least partly implemented in software. For example, each of the processors may be implemented as a programmed digital computing device comprising a central processing unit (CPU), random access memory (RAM), non-volatile secondary storage, such as a hard drive or CD ROM drive, network interfaces, and/or peripheral devices. Program code, including software programs, and/or data are loaded into the RAM for execution and processing by the CPU and results are generated for display, output, transmittal, or storage, as is known in the art. The program code and/or data may be downloaded to the processor in electronic form, over a network, for example, or it may, alternatively or additionally, be provided and/or stored on non-transitory tangible media, such as magnetic, optical, or electronic memory. Such program code and/or data, when provided to the processor, produce a machine or special-purpose computer, configured to perform the tasks described herein.

Reference is now additionally made to Fig. 2, which is a schematic illustration of a flight path computation performed by processor 28, in accordance with some embodiments of the present invention. (Fig. 2 shows an overhead view of crane 30 and UAV 20.)

In the context of the present application, including the claims, the "configuration" of crane 30 refers to the arrangement of the different parts of the crane relative to each other. The configuration of crane 30 is typically a function of several variables that change over time as the crane operates. One such variable is the distance D1, which is the vertical distance from boom 40 to hook 32. Another such variable is the distance D2, which is the horizontal distance from tower 38 to trolley 42 and hook 32. Yet another such variable is an azimuth angle of rotation θ of boom 40, which describes the orientation of the boom relative to some fixed reference line 46. (Angle θ may be measured between reference line 46 and the central longitudinal axis 40a of boom 40, for example.)

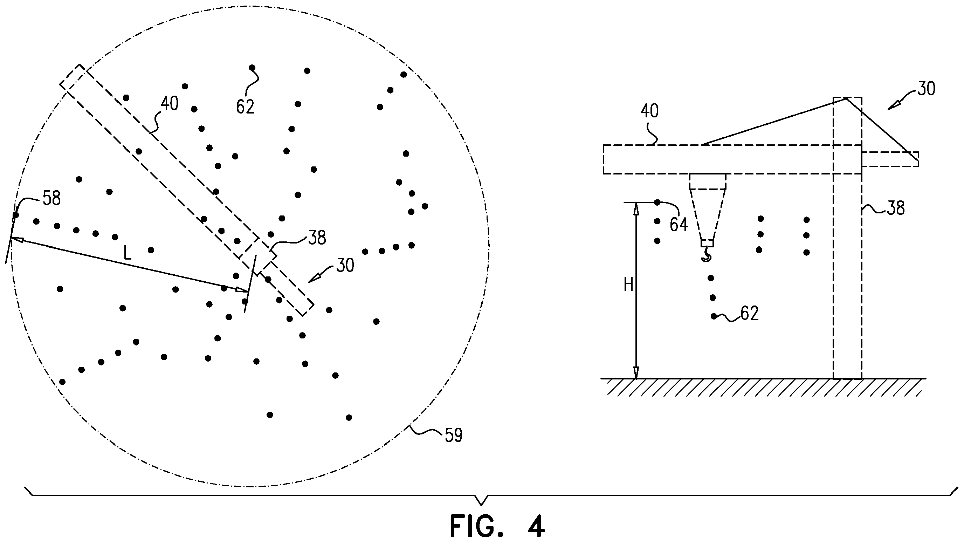

Given the coordinates of the position sensor and one or more other known parameters, the processor ascertains the current configuration of the crane, typically by implicitly or explicitly calculating one or more of the above-described variables. For example, given a known location of the tower and the coordinates of the position sensor, the processor may calculate distance D2, which is the distance from the tower to the portion of the crane to which the sensor is coupled, and angle θ. As illustrated in Fig. 1, the location of the tower may be identified from the coordinates of a reference point 44, provided by the operator of the crane, that is located somewhere on tower 38, typically at the top of tower 38. Alternatively, the processor may ascertain the location of the tower using other techniques, as described below with reference to Fig. 4.

Alternatively or additionally, assuming the position sensor is coupled to hook 32 and given a known height of the boom, the processor may calculate distance D1. (If the position sensor is not coupled to the hook - e.g., if the position sensor is coupled to the trolley - it might not be possible to calculate distance D1. However, it is noted that, in the context of the present application, including the claims, the processor is said to "ascertain the configuration of the crane" even if the processor ascertains the configuration only in part.) The height of the boom may be identified as described below with reference to Fig. 4.

For example, assuming that (i) the coordinates of the sensor, which is coupled to the hook, are (x0, y0, z0), (ii) reference point 44 is at (x1, y1, z1), and (iii) the boom is at height z2, the processor may compute D1 as z2 - z0, and D2 as $\sqrt{(x1-x0)^2 + (y1-y0)^2}$. Similarly, assuming that the position sensor lies under central longitudinal axis 40a and that reference line 46 lies in the plane x = x1, the processor may compute θ from the trigonometric relationships between x0-x1, y0-y1, and D2.

In some embodiments, to increase the precision with which the location of position sensor 34 - and particularly the height of position sensor 34 - is identified by the processor, Differential GPS is used. For example, an additional position sensor, located at a fixed point on the ground, may also transmit a location-indicating signal to the processor, and the processor may use this additional signal to more precisely locate position sensor 34. Alternatively or additionally, the processor may use the location-indicating signal from location sensor 66 to compute the location of position sensor 34 relative to the location of the UAV. Alternatively or additionally, a plurality of position sensors may be placed on the crane, and the processor may use the multiple respective position-sensor coordinates provided by these sensors to more precisely ascertain the configuration of the crane.

In response to ascertaining the current configuration of the crane, the processor computes a flight path for the UAV that passes near the crane, yet avoids colliding with the crane. Typically, the processor computes the flight path by first computing, based on the current configuration of the crane, an expected configuration of the crane at a future time, and, in response to the expected configuration, computing a flight path that is expected to avoid the crane.

For example, Fig. 2 shows the UAV approaching the crane along an initial, predetermined flight path 48 that passes beneath the boom of the crane. (Predetermined flight path 48 may be defined, for example, by the operator of UAV 20, prior to the UAV taking flight.) By repeatedly computing the configuration of the crane, however, processor 28 may ascertain that hook 32 is moving toward the tower of the crane at a given speed. By extrapolating this movement in time (e.g., by assuming that the hook will continue moving toward the tower at the given speed), processor 28 may further ascertain that, as indicated by the broken-line profile of hook 32, hook 32 (and/or cables 33, and/or a load carried by hook 32) is expected to lie along, or dangerously close to, flight path 48. Processor 28 may therefore compute an alternate flight path 50 that passes under the boom but evades the hook, and then cause UAV 20 to follow alternate flight path 50. Subsequently, after passing under the boom, the processor may cause the UAV to return to the initial, predetermined flight path.

In some embodiments, position sensor 34 includes an accelerometer, and/or a separate accelerometer is coupled to the crane, e.g., to the trolley of the crane. In such embodiments, the processor may use information from the accelerometer(s) to facilitate calculating the expected future configuration of the crane.

Reference is now made to Fig. 3, which is a schematic illustration of a plurality of no-fly volumes 52 defined by processor 28, in accordance with some embodiments of the present invention.

Typically, in response to the ascertained current and/or expected configuration of the crane, the processor defines a plurality of no-fly volumes 52 that encompass different respective portions the crane. The processor then computes a flight path for the UAV that does not pass through any of the no-fly volumes; for example, the processor may compute a flight path that passes under the boom of the crane, without passing through any of the no-fly volumes.

Typically, each of no-fly volumes 52 is cylindrical in shape, the radius and length of each cylinder being chosen such as to provide a given margin of safety for the flight path of the UAV. (This margin of safety may depend, for example, on the precision with which the configuration of the crane is known, which may depend, in turn, on the precision of position sensor 34.) For example, the radius of each of the no-fly volumes may be chosen such that the no-fly volume extends to a distance of some number of meters (e.g., 5 m) from the portion of the crane that the no-fly volume surrounds.

For example, the processor may define a first no-fly volume 52a, which encompasses the tower of the crane, a second no-fly volume 52b, which encompasses the boom of the crane (per the current and/or expected orientation of the boom with respect to the tower), and a third no-fly volume 52c, which encompasses the hook of the crane (per the current and/or expected position of the hook with respect to the tower). Given these no-fly volumes, the processor may, for example, compute a flight path that passes under second no-fly volume 52b, between first no-fly volume 52a and third no-fly volume 52c, or on the far side of third no-fly volume 52c (as illustrated in Fig. 2). Alternatively, for example, the processor may compute a flight path that passes under third no-fly volume 52c.

By way of contrast, if, hypothetically, processor 28 would not know the configuration of the crane, the processor would need to define a single no-fly volume 56 encompassing every possible location at which any portion of the crane might be located at any given instant in time. In such a situation, the UAV would not be able to fly near the crane, such that the ability of the UAV to effectively monitor the construction site might be compromised.

In some embodiments, as illustrated in Fig. 3, the height of third no-fly volume 52c is chosen such as to account for the maximum expected height of a load 54 hanging from hook 32. In such embodiments, as noted above, the flight path of the UAV may pass under third no-fly volume 52c. In other embodiments, third no-fly volume 52c extends to the ground. For example, as noted above with reference to Fig. 1, in some embodiments, position sensor 34 is located on trolley 42, alternatively to hook 32; in such embodiments, since the processor typically does not know the height of the hook from the ground, third no-fly volume 52c typically extends to the ground.

Similarly, first no-fly volume 52a typically extends from the ground to a height slightly greater than that of reference point 44, assuming that reference point 44 marks the top of the crane. In the event that reference point 44 is not provided, the processor may use computer-vision techniques to identify the height of the crane; that is, the processor may process images received from imaging device 24 such as to identify the height of the crane. Alternatively, first no-fly volume 52a may extend to the maximum expected height of the crane.

Reference is now made to Fig. 4, which is a schematic illustration of a technique for ascertaining one or more crane parameters, in accordance with some embodiments of the present invention. (Fig. 4 assumes that the position sensor is coupled to the hook of the crane. The left side of Fig. 4 shows an overhead view of the crane.)

By way of introduction, it is recalled that the computations described above, with reference to Figs. 1-3, typically require that several parameters be known to the processor, in addition to the coordinates of the position sensor. In particular:

(i) Knowledge of the height of the boom is typically required for the computation of vertical distance D1 (Fig. 1) and the second and third no-fly volumes (Fig. 3).

(ii) Knowledge of the location of the tower is typically required for the computation of horizontal distance D2 (Fig. 1), azimuth angle $\theta$ (Fig. 2), and the first no-fly volume (Fig. 3).

(iii) Knowledge of the length of the boom and of the counter-boom is typically required for the computation of the second no-fly volume (Fig. 3).

(iv) Knowledge of the height of the tower is typically required for the computation of the first no-fly volume (Fig. 3).

Fig. 4 illustrates a technique by which three of these parameters - the location of the tower, the length of the boom, and the height of the boom - may be ascertained by the processor, assuming that reference point 44 is not provided. Per this technique, the UAV first tracks the coordinates of the position sensor over a period of time, thus obtaining a set of coordinates 62, each of which indicates the location of the position sensor at some previous point in time.

Next, to ascertain the location of the tower, the processor defines a circle 59 that encompasses all of coordinates 62, and identifies the center of circle 59 as the location of tower 38. Next, the processor computes the horizontal distance L between tower 38 and a coordinate 58 that is farthest from tower 38, and then computes the length of the boom from L. For example, the processor may compute the length of the boom as $L + L_T$, where $L_T$ is equal to or slightly greater than the assumed length of the trolley. Finally, the processor computes the vertical distance H between the ground and a coordinate 64 that is highest from the ground, and then computes the height of the boom from H. For example, the processor may compute the height of the boom as $H + H_{TH}$, where $H_{TH}$ is equal to or slightly greater than the assumed combined height of the trolley and the portion of the hook that is above the position sensor.

Alternatively to the technique illustrated in Fig. 4, the processor may ascertain the length of the boom, the height of the boom, and/or the location of the tower using computer vision techniques. Similarly, the remaining two parameters - the height of the tower, and the length of the counter-boom - may be ascertained by the processor using computer vision techniques. For example, the UAV may pass over the crane (at a "safe" height that is known to be greater than the maximum possible crane height), and, from this vantage point, acquire multiple overlapping images of the crane using obstacle-avoidance imaging device 24 and/or payload imaging device 22. The processor may then, using photogrammetric techniques, calculate one or more of the aforementioned parameters from these images.

Alternatively, the processor may not ascertain the height of the tower at all; rather, as described above with reference to Fig. 3, the processor may assume a maximum expected height of the tower, e.g., by assuming that the tower does not rise more than a certain height from the boom, as use this maximum expected height for the first no-fly volume. Similarly, for second no-fly volume 52b (Fig. 3), the processor may assume a maximum expected length of the counter-boom, e.g., by assuming that the length of the counter-boom is not more than a certain percentage of the length of the boom. As yet another alternative, the processor may cause the UAV to pass the tower of the crane only at a height that is above or below second no-fly volume 52b, such that the precise length of the counter-boom is immaterial.

In some cases, as construction proceeds at the construction site, the position of the tower may change. Advantageously, however, even if the processor does not receive an updated reference point 44 from the operator of the crane, the processor may ascertain the new crane location, by continually tracking the coordinates of the position sensor as illustrated in Fig. 4. For example, upon receiving one or more coordinates that lie outside circle 59, the processor may ascertain that the tower has moved, and may therefore compute the new location of the tower.

Similarly, the processor may identify any changes in the height of the boom. For example, upon receiving one or more coordinates that are higher than distance H, the processor may ascertain that the boom has been raised, and may therefore compute the new height of the boom. Conversely, if, over a period of time, the maximum observed height of the position sensor is less than H, the processor may ascertain that the boom has been lowered.

In some embodiments, processor 28 is configured to repeatedly receive from crane 30, via receiver 26, a signal, generated by an internal tracking system of the crane and wirelessly transmitted from the crane, that indicates the current configuration of the crane. (For example, this signal may indicate the distance of the trolley from the tower, the distance of hook from the trolley, and the azimuth angle of rotation of the boom.) The processor may then use this information to define the no-fly volumes and/or compute a flight path, as described above with reference to Figs. 2-3. In such embodiments, position sensor 34 may not be needed.

Reference is again made to Fig. 1. Fig. 1, along with Figs. 2-4, show one particular type of crane in which the boom remains horizontal, i.e., the angle α between the boom and the tower is fixed at 90 degrees. It is noted, however, that embodiments of the present invention may also be applied to cranes in which angle α is variable. For example, some cranes do not include a trolley; rather, hook 32 hangs from a fixed point on boom 40 (typically the end of boom 40 that is farthest from the tower), and the horizontal position of the hook is controlled by adjusting angle α. For such cranes, processor 28 may ascertain the elevation angle of rotation of the boom (i.e., angle α, or some other angle derived therefrom, such as α-90) from the received coordinates of sensor 34, and then compute a flight path responsively thereto.

For example, if the position sensor is coupled to hook 32, the processor may ascertain, from the coordinates of the position sensor, the elevation angle of rotation of the boom, along with the azimuth angle of rotation θ and vertical distance D1, provided that the fixed boom length between the hook and the tower is known. (Techniques such as those described above with reference to Fig. 4 may be used to ascertain this length.) Alternatively, the position sensor may be coupled to the boom at the point from which the hook hangs, or at any point situated at a known distance (measured along the boom) from the hook. In such embodiments, the processor may ascertain the elevation and azimuth angles of rotation from the coordinates of the position sensor, without ascertaining vertical distance D1. (Third no-fly volume 52c may then extend to the ground, as described above with reference to Fig. 3.)

It is noted that, while passing through construction site 21, UAV 20 may perform any suitable function, alternatively or additionally to monitoring the construction site. For example, the UAV may carry an item, such as an item needed for construction, from one area of the construction site to another area of the construction site. The embodiments described herein may help the UAV perform such a task efficiently and safely.

It will be appreciated by persons skilled in the art that the present invention is not limited to what has been particularly shown and described hereinabove. Rather, the scope of embodiments of the present invention includes both combinations and subcombinations of the various features described hereinabove, as well as variations and modifications thereof that are not in the prior art, which would occur to persons skilled in the art upon reading the foregoing description.

## Claims

1. An apparatus for operating an unmanned aerial vehicle (UAV); the apparatus comprising a receiver (37), a transmitter (37), and a processor (31); wherein the processor (31) is configured:

   to receive, via the receiver, coordinates of a position sensor (34) coupled to a portion of a crane (30), a configuration of the crane changing over time due at least to movement of the portion of the crane relative to a tower (38) of the crane;
   to compute, in response to the received coordinates, a flight path (50) that passes under a boom (40) of the crane while circumventing the crane; and
   to cause the UAV to follow the computed flight path, by transmitting flight instructions, via the transmitter, to the UAV.

2. The apparatus according to claim 1, wherein the processor is configured to compute the flight path by:

   defining, in response to the received coordinates, a plurality of no-fly volumes that encompass different respective portions the crane, and computing the flight path such that the flight path does not pass through any of the no-fly volumes.

3. The apparatus according to claim 2, wherein the processor is further configured:

   to track the coordinates of the position sensor over a period of time, prior to computing the flight path, and
   to ascertain, in response to the tracking, one or more parameters selected from the group of parameters consisting of: a location of the tower, a height of the boom, and a length of the boom, and

   wherein the processor is configured to define one or more of the no-fly volumes responsively to the ascertained parameters.

4. The apparatus according to any one of claims 1-3, wherein the portion of the crane to which the position sensor is coupled is selected from the group of portions of the crane consisting of: the boom of the crane, a trolley of the crane, and a hook that hangs from the boom of the crane.

5. The apparatus according to any one of claims 1-4, wherein the processor is configured to compute the flight path by:

in response to the received coordinates, ascertaining a current configuration of the crane, and computing the flight path, in response to the ascertained current configuration.

6. The apparatus according to claim 5, wherein the processor is configured to ascertain the current configuration of the crane by ascertaining an angle of rotation of the boom of the crane.

7. The apparatus according to any one of claims 5-6, wherein the processor is configured to ascertain the current configuration of the crane by ascertaining a distance from the tower to the portion of the crane to which the position sensor is coupled.

8. The apparatus according to any one of claims 5-7, wherein the processor is configured to compute the flight path by:

   computing an expected configuration of the crane at a future time, based on the ascertained current configuration, and
   computing the flight path, in response to the expected configuration.

9. The apparatus according to any one of claims 1-8, wherein the processor is further configured:

   to track the coordinates of the position sensor over a period of time, prior to computing the flight path, and
   to ascertain, in response to the tracking, one or more parameters selected from the group of parameters consisting of: a location of the tower, and a height of the boom of the crane, and

   wherein the processor is configured to compute the flight path responsively to the ascertained parameters.

10. A method for operating an unmanned aerial vehicle (UAV) (20), the method comprising:

    receiving a signal (36) that indicates a configuration of a crane (30);
    computing, in response to the signal, a flight path (50) that passes under a boom (40) of the crane while circumventing the crane; and
    causing the UAV to follow the computed flight path, by transmitting flight instructions to the UAV.

11. The method according to claim 10, wherein the signal is generated by an internal tracking system of the crane.

12. The method according to claim 10, wherein the signal is generated by a position sensor coupled to a portion of the crane such that the signal indicates the configuration of the crane by indicating coordinates of the position sensor,
the configuration of the crane changing over time due at least to movement of the portion of the crane relative to a tower of the crane.

13. The method according to claim 12, wherein computing the flight path comprises:

    in response to the coordinates of the position sensor, defining a plurality of no-fly volumes that encompass different respective portions the crane; and
    computing the flight path such that the flight path does not pass through any of the no-fly volumes.

14. The method according to claim 13, further comprising:

    tracking the coordinates of the position sensor over a period of time, prior to computing the flight path; and
    ascertaining, in response to the tracking, one or more parameters selected from the group of parameters consisting of: a location of the tower, a height of the boom, and a length of the boom, wherein defining the no-fly volumes comprises defining one or more of the no-fly volumes responsively to the ascertained parameters.

15. The method according to any one of claims 12-14, wherein the portion of the crane to which the position sensor is coupled is selected from the group of portions of the crane consisting of: a boom of the crane, a trolley of the crane, and a hook that hangs from the boom of the crane.

FIG. 1

FIG. 2

FIG. 3

FIG. 4

EP 3 416 015 A1

Europäisches
Patentamt

European
Patent Office

Office européen
des brevets

# EUROPEAN SEARCH REPORT

Application Number

EP 18 17 7057

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2017/208133 A1 (DRONOMY LTD [IL]) 7 December 2017 (2017-12-07) * the whole document * | 1-15 | INV. G05D1/00 |
| A | US 2013/124020 A1 (DUGGAN DAVID S [US] ET AL) 16 May 2013 (2013-05-16) * the whole document * | 1-15 | |
| A | US 2014/149004 A1 (BEST GREGORY C [US] ET AL) 29 May 2014 (2014-05-29) * the whole document * | 1-15 | |
| A | US 2016/253808 A1 (METZLER BERNHARD [AT] ET AL) 1 September 2016 (2016-09-01) * the whole document * | 1-15 | |

TECHNICAL FIELDS
SEARCHED      (IPC)

G05D
G08G

The present search report has been drawn up for all claims

| Place of search | Date of completion of the search | Examiner |
|---|---|---|
| Munich | 12 October 2018 | Thomann, Jérôme |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 17 7057

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2018

| Patent document cited in search report | | Publication date | Patent family member(s) | | Publication date |
|---|---|---|---|---|---|
| WO 2017208133 | A1 | 07-12-2017 | NONE | | |
| US 2013124020 | A1 | 16-05-2013 | US 2010256909 A1<br>US 2010332136 A1<br>US 2013124020 A1 | | 07-10-2010<br>30-12-2010<br>16-05-2013 |
| US 2014149004 | A1 | 29-05-2014 | US 2013103271 A1<br>US 2014149004 A1 | | 25-04-2013<br>29-05-2014 |
| US 2016253808 | A1 | 01-09-2016 | CN 105928498 A<br>EP 3062066 A1<br>US 2016253808 A1 | | 07-09-2016<br>31-08-2016<br>01-09-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016165883 A
- US 8144000 B
- EP 2520532 A
- WO 2009084820 A
- US 20160225267 A